(19) Europäisches Patentamt
European Patent Office
Office européen des brevets

(11) **EP 2 073 996 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(21) Anmeldenummer: **07803215.8**

(22) Anmeldetag: **04.09.2007**

(51) Int Cl.:
**B60R 21/0132** (2006.01)

(86) Internationale Anmeldenummer:
**PCT/EP2007/059251**

(87) Internationale Veröffentlichungsnummer:
**WO 2008/031747 (20.03.2008 Gazette 2008/12)**

(54) **VERFAHREN UND VORRICHTUNG ZUM AUSLÖSEN EINES PERSONENSCHUTZMITTELS FÜR EIN FAHRZEUG**

METHOD AND DEVICE FOR TRIGGERING A PERSONAL PROTECTION MEANS FOR A VEHICLE

PROCEDE ET DISPOSITIF DESTINES A DECLENCHER UN MOYEN DE PROTECTION DES PERSONNES POUR UN VEHICULE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.09.2006 DE 102006042769**

(43) Veröffentlichungstag der Anmeldung:
**01.07.2009 Patentblatt 2009/27**

(73) Patentinhaber: **Continental Automotive GmbH 30165 Hannover (DE)**

(72) Erfinder:
• **BRANDMEIER, Thomas**
  **93173 Wenzenbach (DE)**
• **LAUERER, Christian**
  **85077 Manching (DE)**
• **FESER, Michael**
  **93092 Barbing (DE)**

(56) Entgegenhaltungen:
**EP-A- 0 458 796          WO-A-01/98117
WO-A-2005/036108     WO-A-2005/070728
DE-A1- 10 360 823      DE-A1-102004 048 129**

## Beschreibung

Die Erfindung betrifft ein Verfahren und eine Vorrichtung zum Auslösen eines Personenschutzmittels für ein Fahrzeug, insbesondere eines Insassenschutzmittels in einem Fahrzeug, bei dem ein erster Aufprallsensor, insbesondere ein Beschleunigungssensor, ein erstes Aufprallsignal, insbesondere ein Beschleunigungssignal, liefert. Eine aus diesem Beschleunigungssignal abgeleitete erste Aufprallgröße wird mit einem Schwellwert verglichen. Des Weiteren wird ein zweites Aufprallsignal eines zweiten Aufprallsensors aufgenommen und eine aus dem zweiten Aufprallsignal abgeleitete zweite Aufprallgröße gebildet. Der Schwellwert, gegen den die erste Aufprallgröße verglichen wird, ist abhängig von der zweiten Aufprallgröße veränderlich ausgebildet, zumindest teilweise für einen Wertebereich der Aufprallgröße, wohingegen sie in einen anderen Wertebereich der zweiten Aufprallgröße auch konstant gehalten werden kann. Das Personenschutzmittel wird ausgelöst, und zwar vorzugsweise nur dann, wenn das Beschleunigungssignal den Schwellwert überschreitet.

Eine solche Vorrichtung ist bekannt aus dem Europäischen Patent EP 0 458 796 B2. Dort wird ein Verfahren zur Auslösung von Rückhaltemitteln bei einem Sicherheitssystem für Fahrzeuginsassen beschrieben, bei dem ein erfasstes Beschleunigungssignal oder ein davon abgeleitetes Signal gegen einen Schwellwert verglichen wird, der veränderlich ist in Abhängigkeit von einer oder mehreren Aufprallgrößen, die aus einem oder mehreren Signalen von einem oder mehreren Sensoren abgeleitet wird bzw. werden, der bzw. die verteilt im Fahrzeug angeordnet sein können (dortige Ansprüche 1 und 9 sowie Spalte 12, Zeilen 33 bis 42). Eine Auslösung eines Insassenschutzmittels erfolgt nur dann, wenn das Beschleunigungssignal oder ein davon abgeleitetes Signal diesen veränderlichen Schwellwert überschreitet.

Dergleichen Verfahren und Vorrichtungen, die solche Verfahren einsetzen, dienen dem Schutz von Personen, die an einem Fahrzeugunfall beteiligt sind. Dabei werden Sensoren, beispielsweise Beschleunigungssensoren, Drucksensoren etc., eingesetzt, um innerhalb eines Personenschutzsystems ein Personenschutzmittel auszulösen, sobald ein Fahrzeugunfall vorliegt.

Als Personenschutzmittel können einerseits Insassenschutzmittel wie beispielsweise Airbags, Gurtstraffer oder andere Funktionselemente zum Schutz von Insassen während eines Fahrzeugunfalls angesehen werden, beispielsweise ein Wegbewegen eines Fahrzeugsitzes aus der Unfallzone, beispielsweise in Richtung des Fahrzeughecks, sobald sich ein Frontunfall abzeichnet, oder andere Funktionen, beispielsweise das Schließen des Schiebedachs oder ähnliches. Als Personenschutzsystem ist aber auch beispielsweise ein Fußgängerschutzsystem zu verstehen, das, sobald der Aufprall eines Fußgängers erkannt wird, entsprechende Fußgängerschutzmittel auszulösen vermag. Beispielsweise kann die Motorhaube dann angehoben werden, um den Aufprall des betroffenen Fußgängers auf die Motorhaube abzudämpfen, so dass der direkt unter der Motorhaube befindliche starre Motorblock keine zu starken Verletzungen des Fußgängers verursachen kann.

Die zum Erkennen eines Aufpralls eingesetzte Sensorik muss dabei in möglichst kurzer Zeit Informationen über die Charakteristik des Aufpralls ermitteln können, damit geeignete Schutzmittel ausgelöst werde können. Die für eine sichere Erkennung zur Verfügung stehende Zeit ist dabei bei einem seitlichen Aufprall auf das Fahrzeug im Allgemeinen wesentlich kürzer als im Vergleich zu einem Frontalzusammenstoß.

Zur Erkennung von Frontalaufprallunfällen werden in erster Linie Beschleunigungssensoren eingesetzt, die möglichst starr mit der Fahrzeugkarosserie verbunden sind und beispielsweise am Fahrzeugtunnel, meist innerhalb des zentralen Steuergeräts (für ein Insassenschutzsystem) angeordnet sein können oder auch, gegebenenfalls zusätzlich, an einer oder mehreren Stellen in der Fahrzeugfront oder auch in der Fahrzeugseite.

Die hohen Sicherheitsanforderungen im Bereich des Personenschutzes in der Automobiltechnik erfordern aber zunehmend, dass zur Auslösung eines Insassenschutzmittels oftmals nicht nur das Signal nur eines solchen Sensors eingesetzt wird, sondern darüber hinaus, zumindest plausibilisierend, das Signal eines zweiten Sensors. Dies kann beispielsweise in Kombination zu einem Beschleunigungssensor ein weiterer Beschleunigungssensor an einem der vorgenannten Positionen im Kraftfahrzeug sein, aber auch ein Drucksensor innerhalb eines Hohlraums in der Fahrzeugfront oder aber auch ein Körperschallsensor.

Eine Kombination der Signale zweier Aufprallsensoren kann durch eine Änderung der Schwellwertkennlinie, gegen die das Signal des ersten Sensors verglichen wird, in Abhängigkeit von dem Signal eines zweiten Sensors sein, wie beispielsweise in der obigen Patentschrift EP 0 458 796 B2 beschrieben.

In der europäischen Patentschrift EP 0 305 654 B1 wird die gleichzeitige Verwendung von Beschleunigungsaufnehmern und Körperschallsensoren zur Auslösung eines Insassenschutzmittels beschrieben.

Dies geht auch aus der EP 1 019 271 B1 hervor: hier ist eine Vorrichtung für den Insassenschutz in einem Kraftfahrzeug gezeigt, mit einem Sensor zur Aufnahme einer Körperschall-Auslenkung eines Karosseriebestandteils des Kraftfahrzeugs, bei welcher der Sensor eine transversale Körperschall-Auslenkung des Karosseriebestandteils des Kraftfahrzeugs aufnimmt, um in Abhängigkeit von dem aufgenommenen Körperschall ein Insassenschutzmittel des Kraftfahrzeugs zu steuern.

Aus der DE 10 2005 020 146 A1 (siehe Figur und [0019] - [0029]) geht ein Verfahren zum Auslösen eines Personenschutzmittels für ein Fahrzeug hervor, mit einem ersten Aufprallsensor, der ein Beschleunigungssensor ist und ein Beschleunigungssignal als erstes Aufprallsignal liefert, und mit einem zweiten Aufprallsensor, der ein Körperschallsensor ist und als ein zweites Aufprallsignal ein Körperschallsignal liefert. Das zweite Aufprallsignal (Körperschallsignal) ist dabei veränderlich, je nachdem, ob es sich bei dem Aufprallobjekt um einen Fußgänger, ein anderes Fahrzeug, einen Baum oder auch nur lediglich einen Ball oder einen Stein handelt. Nur in dem Fall, in dem es sich bei dem Kollisionsobjekt um einen Fußgänger handelt, wird ein Auslösesignal an das Personenschutzsystem, das hier als Fußgängerschutzsystem ausgebildet ist, gesendet, wobei das Fußgängerschutzsystem zum Schutz des Fußgängers aktiviert wird. Je nach Schwere der Kollision, welche sich einerseits aus den Signalen des ersten Aufprallsensors (Beschleunigungssensors) und in besonderer Weise aus den Signalen des zweiten Aufprallsensors (Körperschallsensors) ermitteln lässt, kann auch die gezielte Auslösung eines Insassenschutzsystems erfolgen oder unterbleiben.

Eine heute übliche Anordnung von Beschleunigungssensoren und/oder anderen Aufprallsensoren in einem Fahrzeug, deren Signale zur Auslösung eines oder mehrerer Insassenrückhaltemittel Verwendung finden, ist ein Beschleunigungssensor mit Beschleunigungsempfindlichkeit in Fahrtrichtung, der an oder innerhalb der zentralen Steuereinheit eines Insassenrückhaltesystems in der Fahrzeugmitte, vorzugsweise am Fahrzeugtunnel, und zwei ausgelagerte Sensoren in der linken und rechten Fahrzeugfront. Solche ausgelagerten Sensoren werden oftmals als Satelliten bezeichnet. Die ausgelagerten Sensoren können als so genannte Early Crash Sensoren (ECS) ausgebildet sein, das heißt, dass sie erste Beschleunigungssignale, die von einem Aufprall hervorgerufen werden, sehr frühzeitig an die zentrale Steuereinheit melden können. Üblicherweise werden diese Signale nicht nur als frühe Warnung in der zentralen Steuereinheit verwendet, sondern zusätzlich auch als plausibilisierende Signale für das Beschleunigungssignal des zentral in der Steuereinheit angeordneten Beschleunigungssensors.

Durch die Verkabelung zweier ausgelagerten Sensoren und auch deshalb, weil in den Satelliten üblicherweise nicht nur die Sensoren, sondern auch signalverarbeitende, auswertende Elektronik, sowie Kommunikationselektronik angeordnet sein kann, ist eine solche Anordnung jedoch nicht nur aufwändiger in der Herstellung und dadurch teurer sondern auch störanfälliger. Eine Reduzierung der Anzahl von Early Crash Sensoren (ECS) oder der gänzliche Verzicht auf jedwede solche ausgelagerte Sensoreinheit (Satellit) bei Insassenschutzsystemen, insbesondere zur Frontaufprallerkennung, bei unveränderter Aufprallerkennungseignung wäre hier von Vorteil.

Es hat sich jedoch in Crash-Tests herausgestellt, dass insbesondere bei einer Verwendung von nur einem Beschleunigungssensor zur Frontaufprallerkennung, insbesondere innerhalb des zentralen Steuergeräts eines Insassenschutzsystems, bestimmte Aufprallarten nur schwer voneinander unterschieden werden können. Insbesondere so genannte "weiche Crashs" im Rahmen von ODB-Crash-Tests (ODB: Offset Deformable Barrier), bei denen deformierbare Objekte mit unterschiedlicher Überdeckung der Fahrzeugfront, hauptsächlich seitlich auf der Fahrzeugfront auftreffen, können nur sehr schlecht von so genannten "harten Crashs" unterschieden werden, beispielsweise Aufprallunfälle auf eine harte Wand oder auf vergleichsweise nicht deformierbare Objekte mit unterschiedlicher Überdeckung der Fahrzeugfront im Rahmen von so genannten Versicherungs-Crash-Tests, beispielsweise des AZT-Crashtests des Allianzzentrums für Technik.

Der Erfindung liegt folglich die Aufgabe zugrunde, verschiedene Aufprallarten bei Fahrzeugen besser unterscheiden zu können. Die Aufgabe wird gelöst durch ein Verfahren gemäß Anspruch 1. Die Aufgabe wird weiterhin gelöst durch eine Vorrichtung gemäß Anspruch 7.

Bei dem erfindungsgemäßen Verfahren zum Auslösen eines Personenschutzmittels für ein Fahrzeug, insbesondere eines Insassenschutzmittels in einem Fahrzeug liefert ein erster Aufprallsensor, ein Beschleunigungssensor, ein erstes Aufprallsignal, nämlich ein Beschleunigungssignal, aus dem eine erste Aufprallgröße abgeleitet wird und mit einem Schwellwert verglichen wird. Ein zweiter Aufprallsensor liefert ein zweites Aufprallsignal, aus dem eine zweite Aufprallgröße gebildet wird. Der Schwellwert ist abhängig von der zweiten Aufprallgröße veränderlich ausgestaltet. Das Personenschutzmittel wird nur dann ausgelöst, wenn die erste Aufprallgröße den Schwellwert überschreitet. Die Auslösung kann auch noch von weiteren Kriterien abhängig gemacht werden. Das erfindungsgemäße Verfahren zeichnet sich dadurch aus, dass der zweite Aufprallsensor ein Körperschallsensor ist, das zweite Aufprallsignal ein Körperschallsignal und die zweite Aufprallgröße ein Maß für die Schallleistung, die Schallleistung, die mittlere Schallleistung oder der Schallenergie des Körperschallsignals und damit ein Maß für die Volumenänderung des Fahrzeugs während des Aufpralls. Darunter ist zu verstehen, dass die zweite Aufprallgröße zumindest näherungsweise proportional zu zumindest einer der Größen Schallleistung, mittlere Schallleistung und Schallenergie des Körperschallsignals ist und dadurch insbesondere auch proportional zur Volumenänderung ist.

Vorzugsweise wird die zweite Aufprallgröße gebildet durch oder zumindest abgeleitet aus dem Betrag des gemessenen Körperschallsignals (aks), eines zeitlich normierten oder nicht normierten zeitlichen Integrals davon. In der Praxis werden diese Werte oftmals für ein Maß der Körperschallleistung, der zeitlich gemittelten Körperschallleistung oder der Energie des Körperschallsignals verwendet wird, oftmals da diese Werte zumeist wesentlich einfacher zu berechnen sind als andere Näherungsgrößen und der Rechenaufwand dadurch geringer gehalten werden kann, was wiederum ggf. den Einsatz von preiswerteren Prozessoren ermöglicht und dadurch Kosten einspart. Es können natürlich aber auch andere Gründe für ein solches Vorgehen sprechen.

Aufgrund analoger Überlegungen kann es in anderen Ausführungsbeispielen vorteilhaft sein, wenn die zweite Aufprallgröße gebildet wird durch oder zumindest abgeleitet wird aus dem Quadrat des gemessenen Körperschallsignals (aks) oder eines zeitlich normierten Integrals davon, die äquivalent wirkend wie die vorgenannten Näherungsgrößen sein können, jedoch eher den physikalischen Definitionen für Leistung, mittlere Leistung beziehungsweise Energie entsprechen.

Als erste Aufprallgröße wird vorzugsweise ein Maß für die zeitliche Änderung des Beschleunigungssignals eingesetzt. Dies wird anhand der Figurenbeschreibung noch ausführlich erläutert werden. Das erfindungsgemäße Verfahren ist jedoch keineswegs auf diese spezielle Ausführungsform einer ersten Aufprallgröße beschränkt. Es kann unter Umständen ebenfalls von Vorteil sein, andere aus dem Beschleunigungssignal abgeleitete Größen als erste Aufprallgrößen zu verwenden, beispielsweise einen gleitenden zeitlichen Mittelwert des Beschleunigungssignals, das Beschleunigungssignal selbst, unter dem immer auch das ggf. in einer Vorverarbeitung für die Anwendung geeignet gefilterte Beschleunigungssignal zu verstehen ist, ein Maß für die Geschwindigkeit aufgrund eines integrierten Beschleunigungswertes oder ähnliches.

Die Erfindung geht davon aus, dass der hochfrequente Körperschall während eines Aufprallunfalls in einem Fahrzeug näherungsweise durch ein einfaches Modell der Schallwellenausbreitung in einem homogenen Festkörper angenähert werden kann. Gleichzeitig wird das vergleichsweise niederfrequente Beschleunigungssignal dazu verwendet, einen Aufprallunfall mithilfe eines einfachen Feder-Masse-Modells zu beschreiben, das bislang nicht verwendet werden konnte, da eine Variable bislang nicht durch Messung erhältlich: der Deformationsweg und somit das deformierte Volumen des Fahrzeugs. Diese Variable kann nun jedoch aus dem Körperschallmodell und der Messung des Körperschalls durch Messung erhalten werden. Dadurch kann die bislang nicht zur Verfügung stehende Variable zur Änderung eines Auslöseschwellwerts dienen, gegen den das Messsignal, das Beschleunigungssignal, oder vielmehr eine davon abgeleitete erste Aufprallgröße, verglichen wird. Dadurch können bislang nur schwer unterscheidbare Aufprallarten voneinander deutlich unterschieden werden. Insbesondere kann eine Klassifizierung des Aufpralls in einem "weichen Crash" oder in einen "harten Crash" erfolgen, was insbesondere bei Crashtests besonders wichtig ist, beispielsweise bei den weiter oben bereits beschriebenen ODB- oder AZT-Crash-Tests.

Das neue Crashmodell für Beschleunigungssignale geht von einem einfachen Feder-Masse-Modells aus, die über eine Federschwingungsgleichung physikalisch beschrieben werden kann. Aus diesem Federmassemodell kann eine Lösung für die Beschleunigung einer solchen Differenzialgleichung für die Beschleunigung des Fahrzeugs gefunden werden. Die Ableitung dieser Gleichung, also die Ableitung der Beschleunigung ist proportional zur Änderung des Volumens während des Aufpralls.

Andererseits geht das Körperschallmodell davon aus, dass die Schallleistung, die mittlere Schallleistung oder die Schallenergie des Körperschallsignals ebenfalls proportional zur Volumenänderung des Fahrzeugs während des Aufpralls ist. Die Schallleistung lässt sich jedoch leicht aus dem gemessenen Körperschall herleiten, beispielsweise in einfachster Näherung durch das Quadrat des gemessenen Körperschallsignals. Folglich steht eine von dem Aufprallsignal, dem Körperschallsignal, abgeleitete zweite Aufprallgröße zur Verfügung, die ebenfalls direkt proportional zur Volumenänderung des Kraftfahrzeugs während des Aufpralls ist.

Durch einfache Überlegungen können die extremalen Bedingungen eines "harten Crashs" und eines "weichen Crashs" gefunden werden. Daraus kann eine Schwellwertkennlinie für die erste Aufprallgröße in Abhängigkeit von der Volumenänderung des Kraftfahrzeugs gefunden werden. Beide Schwellwertkennlinien können zur Auslösung eines Insassenschutzmittels verwendet werden: Überschreitet die erste Aufprallgröße eine solchermaßen kombinierte Schwellwertlinie, die von der zweiten Aufprallgröße abhängt, so wird das Personenschutzmittel ausgelöst.

Vorteilhafte Ausführungsformen sind in den Unteransprüchen angegeben.

Körperschall kann definiert werden als elastische Spannungswelle, die sich mit Schallgeschwindigkeit in einem Körper ausbreitet. Ursache der Körperschallentstehung sind unterschiedliche mikroskopische und makroskopische Effekte. Diese treten bei der klassischen Deformation von Materialien auf. Hierbei wird die durch die materialphysikalischen Mechanismen während der Verformung Körperschall erzeugt. Die maßgeblichen physikalischen Effekte bei der plastischen Deformation von Metallen sind insbesondere Versetzungsbewegungen, Zwillingsbildung - auch bekannt als "Zinnschrei" -, die martensitische Umwandlung, die Lüders-Deformation, Rissbildung und Bruch eines solchen Festkörpers. Diese mikroskopischen Veränderungen in der kristallographischen Struktur des Metalls führen zu unterschiedlichen Anregungen der einzelnen Moleküle und Molekülverbände oder sogar einzelner Atome oder Atomverbände während der Deformation. Dabei entsteht Schallemission, die als Körperschall bezeichnet wird.

Dies geschieht insbesondere auch während der Deformation von Fahrzeugteilen während eines Aufprallunfalls. Insbesondere neuartige Stähle und Legierungen, wie sie in der Automobilindustrie verwendet werden, beispielsweise TRIP-Stahl, erzeugen signifikante Schallemissionen während der Deformation. Allen physikalischen Mechanismen, die zur Entstehung von Körperschall beitragen ist gemein, dass sie während eines Deformationsvorganges in der Deformationszone des Fahrzeugs auftreten können. Die dabei entstehende Schallleistung des Körperschalls ist abhängig von dem deformierten Volumen und der Deformationsgeschwindigkeit, sowie von der Charakteristik des oder der beteiligten Materialien und der Art der Deformation. Zusätzliche äußere Ursache der Körperschallentstehung ist vor allem Reibung. Diese tritt zwangsläufig in der Verformungszone auf und ist ebenfalls abhängig von dem deformierten Volumen und der Deformationsgeschwindigkeit. Die einzelnen Körperschallquellen in der Deformationszone ergeben ein Summensignal, das sich mit Schallgeschwindigkeit in der Fahrzeugstruktur ausbreitet und an nahezu beliebiger Position gemessen werden kann.

Die Übertragung des hochfrequenten Körperschalls unterscheidet sich in der Ausbreitungsgeschwindigkeit und der Amplitudendämpfung von dem heute zumeist zur Auslösung von Insassenrückhaltemitteln verwendete niederfrequenten Beschleunigungssignalen, die zumeist unterhalb einer Grenzfrequenz von ca. 400 Hz gemessen werden. Körperschall wird im Allgemeinen oberhalb dieser Frequenz gemessen. Körperschall setzt sich zudem aus mehreren Wellenarten zusammen. Beispiele hierfür sind die Biege- und die Longitudinalwelle. Eine Biegewelle mit einer Frequenz von 400 Hz breitet sich in einer 3mm dicken Stahlplatte mit einer Geschwindigkeit von 100mm/ms aus. Derselbe Wellentyp zeigt bei einer Frequenz von 50 kHz bereits eine Ausbreitungsgeschwindigkeit von 2400mm/ms. Die Longitudinalwelle weist keine dispersiven Effekte auf und breitet sich so unabhängig von der Frequenz mit einer Geschwindigkeit von ca. 5000mm/ms in der beschriebenen Stahlplatte aus. Dadurch steht der Körperschall sehr schnell an der Sensorposition zur Verfügung, selbst wenn diese Sensorposition weit von dem Aufprallort entfernt liegt.

Zur Überprüfung der Eignung von Körperschallsignalen zur Auslösung von Insassenrückhaltemitteln wurden in den letzten Jahren viele Crash-Tests an Fahrzeugen durchgeführt. Die Testfahrzeuge wurden mit verschiedenen Sensoren an mehreren Positionen ausgestattet. Beispielsweise wurden Körperschallsensoren am Schlossquerträger in der Fahrzeugfront angebracht. Im Passagierraum wurden Sensoren auf dem Tunnel, nahe der Position des zentralen Steuergeräts, innerhalb des zentralen Steuergeräts auf dessen Gehäuse oder auch auf der Leiterplatte innerhalb des zentralen Steuergeräts angeordnet. Es wurde festgestellt, dass insbesondere schwer unterscheidbare

Crash-Typen durch die Verwendung von Körperschallsignalen leichter erkannt werden können:

- der AZT-Versicherungstest bei einer Aufprallgeschwindigkeit von 16km/h, bei einer 40%igen Flächenüberdeckung des aufprallenden Objekts, bei einer starren Wand oder auch bei dem so genannten "Danner-Test", bei denen keinesfalls die Auslösung von Gurtstraffern oder Airbags stattfinden soll,
- der 20km/h Crash-Test gegen eine starre Wand mit vollständiger Flächenüberdeckung des aufprallenden Objekts, bei dem ebenfalls kein Airbag ausgelöst werden soll und
- der so genannte ODB-Crash-Test (ODB: Offset Deformable Barrier) bei einer Aufprallgeschwindigkeit von 64km/h, wie er beispielsweise bei den so genannten Euro NCAP Crash-Tests eingesetzt wird, bei dem - im Gegensatz zu den zwei vorgenannten Crash-Tests - ein sehr schnelles Auslösen von Gurtstraffern und Airbags erfolgen soll.

Bei diesen Crash-Tests wurde festgestellt, dass viele Anbringungsorte für Körperschallsensoren im Fahrzeug geeignet sind. Beispielsweise der Schlossquerträger, der Mitteltunnel innerhalb der Fahrgastzelle, aber auch eine Position innerhalb des zentralen Steuergeräts des Airbagsystems ist möglich.

Das erfindungsgemäße Verfahren macht sich zu Nutze, dass Beschleunigungssignal durch den Beschleunigungssensor in einem anderen Frequenzband des erzeugten Aufprallsignals gemessen werden, insbesondere bei Frequenzen unterhalb von 400 Hz als das hochfrequente Körperschallsignal, das insbesondere oberhalb von 2 kHz, meist sogar oberhalb von 4 oder sogar 6 kHz bis 20 oder mehr kHz gemessen wird.

Zur Messung sowohl des Beschleunigungssignals als auch des Körperschallsignals stehen mehrere vorteilhafte Varianten zur Verfügung. Es kann beispielsweise ein Beschleunigungssensor zur Messung beider Signalanteile eingesetzt werden. Dabei wird ein üblicher Beschleunigungssensor, der heutzutage zumeist in Mikromechanik gefertigt wird, so ausgelegt, dass mit einer mikromechanischen Sensorzelle ein Messbereich bis hin zu 20 kHz oder höher ausgewertet werden kann. Durch geeignet nachgeschaltete Filter kann einerseits das niederfrequente Beschleunigungssignal bis 400 Hz extrahiert werden und andererseits das höherfrequente Signal zwischen bis 20 kHz oder mehr. Dies hat den Vorteil, dass ein solchermaßen kombinierter Körperschall- und Beschleunigungssensor innerhalb eines Gehäuses angeordnet werden kann, beispielsweise innerhalb des zentralen Steuergerätes eines Insassenschutzsystems, jedoch auch beispielsweise an einer vorgelagerten Position innerhalb des Fahrzeugs, die näher zur erwarteten Deformationszone hin angeordnet ist. Dies hat im Vergleich zu zwei getrennten Sensoreinheiten den Vorteil, dass nicht nur die gleiche mikromechanische Sensorzelle, sondern auch zumindest teilweise die gleiche vor- und weiterverarbeitende Elektronik und Kommunikationselektronik für beide Signalanteile verwendet werden können. Dies spart zum einen Kosten und ist zudem weniger störanfällig, beispielsweise gegenüber Einflüssen, die durch elektromagnetische Störstrahlung auf Übertragungswege herbeigeführt werden könnten.

Vorzugsweise kann eine solche kombinierte Sensoreinheit innerhalb des zentralen Steuergeräts angeordnet werden. Dies hat den Vorteil, dass die Sensorsignale vor ihrer Übertragung zur Auswerteeinheit insbesondere nicht digitalisiert werden müssen, da sie nur sehr kurze Leitungswege bis zur auswertenden Elektronik durchlaufen müssen.

Andererseits kann es bei manchen Fahrzeugstrukturen von Vorteil sein, eine solch kombinierte Sensoreinheit an vorgelagerter Position, näher zu dem erwarteten Deformationsbereich hin anzuordnen. Dort können insbesondere die Beschleunigungssignale frühzeitiger vorliegen als in der zentralen Steuereinheit, da die langsameren Beschleunigungssignale nicht zunächst einen weiteren Weg über die Fahrzeugstruktur zurücklegen müssen.

Falls die Fahrzeugkonstruktion und die dadurch zu erwartenden Aufprallsignale es jedoch als angezeigt erscheinen lassen, den Körperschallsensor und den Beschleunigungssensor in getrennten Sensoreinheiten mit jeweils eigenen Gehäuse unterzubringen, so schließt die Anwendung eines erfindungsgemäßen Verfahrens eine solche Anordnung jedoch keinesfalls aus.

Entscheidend für eine geeignete Anordnung eines Körperschallsensors und eines Beschleunigungssensors innerhalb des Fahrzeugs ist die beidenfalls starre Kupplung an starre Fahrzeugstrukturteile, beispielsweise Längs- oder Querträger, den Fahrzeugtunnel, die B-Säule, die A-Säule oder, wie bereits oben erwähnt, den Schlossquerträger.

Für den erfindungsgemäßen Einsatz von Körperschallsignalen zur Auslösung von Insassenrückhaltemitteln ist es sogar möglich, den Körperschallsensor in einer Seitenstruktur des Fahrzeugs anzubringen, so lang eine starke Anbindung an die starre Fahrzeugstruktur gegeben bleibt.

Nachfolgend werden die zugrunde gelegten physikalischen Modelle und ein Ausführungsbeispiel für die Erfindung anhand schematischer Figuren erläutert. Gleiche konstruktive und funktionelle Merkmale werden im Folgenden mit den gleichen Bezugszeichen bezeichnet.

Auch wenn bisher und vor allem auch nachfolgend in der Figurenbeschreibung überwiegend von Systemen zur Frontaufprallerkennung die Rede ist, so ist weder das erfindungsgemäße Verfahren noch die erfindungsgemäße Vorrichtung auf eine Frontaufprallerkennung beschränkt. Beides kann ebenso in der Seitenaufprallerkennung eingesetzt werden. Es zeigen:

Figur 1     eine Darstellung der steifen Fahrzeugstruktur und mögliche Anbringungsorte für einen erfindungsgemäßen Beschleunigungssensor und einen erfindungsgemäßen Körperschallsensor,

Figur 2     eine erfindungsgemäße Insassenschutzvorrichtung gemäß einem ersten Ausführungsbeispiel,

Figur 3     eine erfindungsgemäße Insassenschutzvorrichtung gemäß einem zweiten Ausführungsbeispiel,

Figur 4     eine Darstellung des Schallleistungsmodells,

Figur 5     eine Darstellung des Federmassemodells eines Fahr- zeugaufpralls,

Figur 6     eine erfindungsgemäße Schwellwertkennlinie für einen "harten Crash",

Figur 7     eine erfindungsgemäße Schwellwertkennlinie für einen "weichen Crash",

Figur 8     eine zusammengesetzte Schwellwertkennlinie gemäß der Erfindung und

Figur 9     einen Ablauf eines Ausführungsbeispiels für ein er- findungsgemäßes Verfahren.

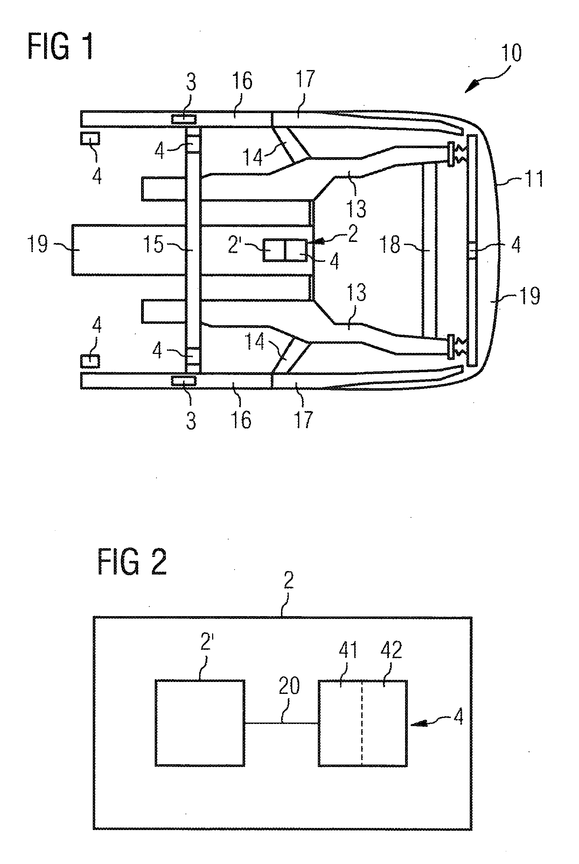

Figur 1 zeigt schematisch die tragenden Karosseriebauteile eines Kraftfahrzeugs. Dargestellt ist der vordere Abschnitt eines Kraftfahrzeugs 10. Dieses weist miteinander verbundene tragende Karosseriebauteile 13, 14, 15, 17 und 18 auf. Mit dem Bezugszeichen 19 ist der Fahrzeugtunnel des Kraftfahrzeugs gekennzeichnet, welcher ebenfalls ein tragendes Karosseriebauteil darstellt. Sämtliche tragende Karosseriebauteile sind mechanisch fest miteinander verbunden.

In den mit dem Bezugszeichen 16 dargestellten Türen sind auf Druck reagierende Sensoren 3 angeordnet, die zur Auslösung eines Seiten-Insassenschutzmittels dienen. Dieses sind (in der Figur nicht ersichtlich) mit der am Mitteltunnel 19 angeordneten Auswerteeinheit elektrisch verbunden.

Die Bezugszeichen 4 zeigen mögliche Positionen, sowohl für Beschleunigungssensoren als auch für Körperschallsensoren. Wie bereits eingangs erwähnt, können sowohl der Körperschallsensor 41 als auch der Beschleunigungssensor 42 voneinander unabhängige Sensoren sein, aber auch durch nur einer Sensoreinheit 4 verwirklicht werden, wobei die Trennung der beiden unterschiedlichen Frequenzbereiche für den Beschleunigungssensor 41 und den Körperschallsensor 42 durch geeignete Filterelektronik verwirklicht wird. Diese beiden Ausführungsvarianten sind schematisch in den Figuren 1 und 2 durch eine gestrichelt eingezeichnete Trennlinie innerhalb einer Sensoreinheit 4 dargestellt. In Figur 1 ist lediglich die gemeinsame Sensoreinheit 4 dargestellt, wobei innerhalb der Sensoreinheit 4 auch der Körperschallsensor 42 von dem Beschleunigungssensor 41 getrennt und an den beliebigen mit dem Bezugszeichen 4 gekennzeichneten Positionen im Fahrzeug angeordnet sein können. Egal in weicher Anordnungsvariante sind jedoch immer sowohl der Körperschallsensor 42 als auch der Beschleunigungssensor 41 Signal mit der Auswerteeinheit 2 miteinander signalverbunden. Vorzugsweise, wie in Figur 1 dargestellt, sind die Auswerteeinheit 2' und die kombinierte Sensoreinheit 4 innerhalb des Zentralsteuergeräts 2 angeordnet.

Ist jedoch die kombinierte Sensoreinheit 4 beispielsweise am vorderen Querträger angeordnet oder an anderer ausgelagerter Position als Satelliteneinheit, so sind die Daten vor der Übertragung von der kombinierten Sensoreinheit 4 in das zentrale Steuergerät 2 zu digitalisieren und einer Kommunikationseinheit (nicht dargestellt) in der kombinierten Sensoreinheit 4 zu übermitteln, die die Sensorwerte a, aks digitalisiert, durch ein entsprechendes Kommunikationsprotokoll aufbereitet und an das zentrale Steuergerät 2 übermittelt. Dort müssen entsprechende Empfangsmittel vorgesehen sein, die die digitalisierten Sensorsignale wieder decodieren können und einem geeigneten Auswertealgorithmus innerhalb der Auswerteeinheit 2' zuführen können.

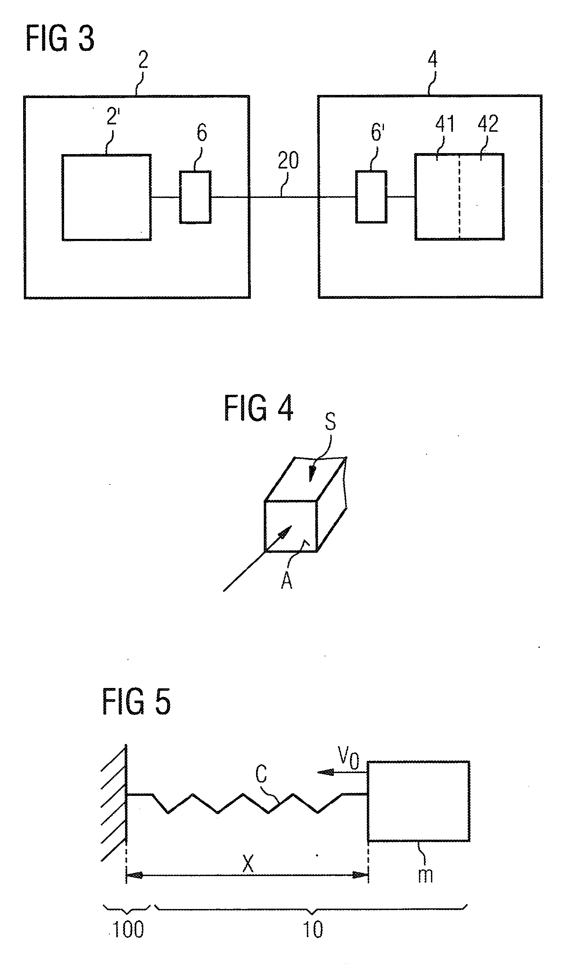

Figur 4 zeigt schematisch einen Fahrzeuglängsträger bei einer Deformation in Längsrichtung, was durch den Pfeil angedeutet wird. Für die emittierte Schallleistung P während der Deformation des Fahrzeuglängsträgers wird der physikalische Zusammenhang wie folgt angenommen:

$$P = S \cdot \dot{V} = S \cdot A \cdot v \text{ ,}$$

wobei

P     die Schallleistung in W,
S     die potentielle Schallenergiedichte in $Jm^{-3}$,
A     die Aufprallfläche in $m^2$,
v     die Aufprallgeschwindigkeit in $ms^{-1}$ und
$\dot{V}$     die Volumendeformationsrate in $m^3s^{-1}$

sind.

Die potentielle Schallenergiedichte stellt eine materialabhängige Konstante dar. Sie ist spezifisch für ein bestimmtes Fahrzeugteil und empirisch ermittelbar. Die Volumendeformationsrate ist das pro Zeiteinheit deformierte Materialvolumen. Sie lässt sich auch mit der Deformationsgeschwindigkeit und der Aufprallfläche A der Grundfläche des deformierten Teils angeben. Aus diesem Zusammenhang lässt sich die direkte Abhängigkeit der Leistung des imitierten Körperschalls P von der Deformationsgeschwindigkeit v ablesen.

Beim Aufprall eines Fahrzeugs ergibt sich ein Summensignal aus der Deformation aller beteiligten Fahrzeugteile. In erster Näherung wird jedoch angenommen, dass sich der starre Fahrzeugteil, wie in Figur 1 dargestellt, zusammen wie ein Festkörper gemäß Figur 4 verhalten, wobei Einflüsse von den übrigen, nicht zum starren Aufbau des Fahrzeugs gehörenden Karosserieteile vernachlässigbar sind. Insofern wird obiger Zusammenhang für die Schallleistung P für das gesamte Fahrzeug angewendet.

Ein Maß für die Schallleistung P ist dabei beispielsweise der Betrag des, ggf. in einer Signalvorverarbeitung gefilterten, Körperschallsignals aks, dessen, vorzugsweise zeitlich normierten, zeitlichen Integrals, des Quadrats des Körperschallsignals aks oder dessen, vorzugsweise zeitlich normierten, zeitlichen Integrals.

Über den bekannten, über die empirisch ermittelte potentielle Schallenergiedichte S ist die folglich in dieser Weise messbare Schallleistung P direkt proportional zur Volumendeformationsrate $\dot{V}$. Diese Volumendeformationsrate $\dot{V}$ wird als zweite Aufprallgröße verwendet, um eine Schwellwertkennlinie zu verändern.

Figur 5 zeigt das physikalische Modell, das dem Fahrzeugaufprall in Bezug auf das messbare, niederfrequente Beschleunigungssignal a zugrund gelegt wird. Es handelt sich dabei im Wesentlichen um ein Feder-Masse-Modell. Die im Aufprallfall auftretende Kraft wird in Abhängigkeit von der Deformation, insbesondere dem Deformationsweg, betrachtet, das ist, beispielsweise bei einem Frontalaufprall, die längs des Aufpralls erreichte Länge des deformierten Bereichs X. Das deformierte Material des Kraftfahrzeugs innerhalb der Deformationslänge X wird als Feder angenähert mit einer Federkonstante, der so genannten Crash-Steifigkeit C. Die gesamte Fahrzeugmasse, die für jedes Fahrzeugmodell zumindest näherungsweise bekannt ist, wird als homogene Masse m angenähert, die auf die Feder einwirkt und zwar mit einer Anfangsgeschwindigkeit $v_0$. Das Bezugszeichen 100 bezeichnet das Hindernis, gegen den die Verformung der Feder und der Masse, die das Fahrzeug 10 repräsentieren, stattfindet. Über das dargestellte Modell gelangt man zu folgender Differenzialgleichung:

$$m \cdot \ddot{x} = C \cdot x \qquad\qquad\qquad [2]$$

Zusammen mit der Kreisfrequenz $\omega_o = \sqrt{\dfrac{C}{m}}$ kann eine Lösung dieser Differentialgleichung für die wirkende Beschleunigung wie folgt gefunden werden:

$$a(t) = -v_0\omega_0 \cdot \sin(\omega_0 t) \text{ ,} \qquad\qquad\qquad [3]$$

wobei t die Zeit darstellt. Mit $\dot{V}=A\cdot v_0$, wobei A die Aufprallfläche ist, erhält man schließlich:

$$\dot{a}(t) \propto \dot{V} \qquad\qquad [4]$$

Aus [1] und [4] erhält man daraus den Zusammenhang zwischen der ersten Aufprallgröße dieses Ausführungsbeispiels $\dot{a}$ und der zweiten Aufprallgröße $\dot{V}$ :

$$\frac{\dot{a}}{\dot{V}} = \frac{C'}{m} , \qquad\qquad [5]$$

wobei C' als Crash-Härte bezeichnet wird und im Wesentlichen die Crash-Steifigkeit geteilt durch die Aufprallfläche A (C/A) ist.

Über diesen funktionellen Zusammenhang kann die Schwellwertkennlinie (th) für die erste Aufprallgröße $\dot{a}$ in Abhängigkeit von der zweiten Aufprallgröße $\dot{V}$ entsprechend des zugrunde gelegten physikalischen Aufprall-Modells in sinnvoller Art variiert werden.

Für den eingangs erwähnten harten Crash ist der Deformationsweg X äußerst gering. Dies ist beispielsweise bei einem AZT-Crash-Test der Fall oder bei einem Crash-Test gegen eine starre Wand, bei dem vergleichsweise wenig Deformationsweg X, zumindest in der Anfangszeit des Aufprallunfalls, erreicht wird. Für diesen Fall lässt sich aus obiger Gleichung [5] ein Extremwert für die erste Aufprallgröße angeben:

$$\dot{a} = k_1 \cdot \frac{1}{\dot{V}} , \qquad\qquad [6]$$

wobei $k_1$ eine empirisch ermittelte Konstante für ein Fahrzeugmodell ist.

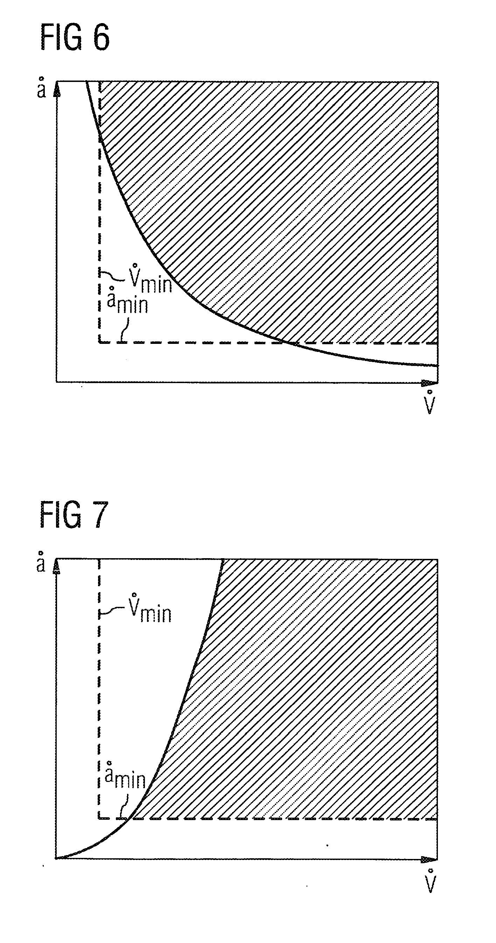

Figur 6 zeigt eine daraus gewonnene Schwellwertkennlinie für die erste Aufprallgröße $\dot{a}$ in Abhängigkeit von der zweiten Aufprallgröße $\dot{V}$. Die hyperbelartige Schwellwertkennlinie ist in durchgezogener Linie dargestellt. In der Darstellung dieser Schwellwertkennlinie können Werte für die erste Aufprallgröße $\dot{a}$ rechts oberhalb der Schwellwerthyperbel als Kriterien für das vorliegen eines harten Crashes angesehen werden, aufgrund dessen die Auslösung eines Insassenrückhaltemittels erfolgen soll. Um die Zuverlässigkeit eines Insassenschutzsystems zusätzlich zu erhöhen, können auch konstante Mindestverformungsraten-Werte vorgesehen sein und Mindest-Beschleunigungsanstiege, die in der Figur 6 als Parallele zu der Hochwertachse beziehungsweise als Parallele zu der Rechtswertachse strichliert eingetragen sind. Das Vorliegen einer Mindestverformungsrate und eines Mindest-Beschleunigungsanstieg kann als zusätzliches Kriterium für das Erkennen eines harten Crashes dienen. Folglich stellt der schraffierte Bereich in der Figur 6 den Bereich von Werten von $\dot{a}$ in Abhängigkeit von $\dot{V}$ dar, die zu einer Auslösung eines Insassenschutzmittels hinreichen, da ein harter Crash klassifiziert wurde.

Figur 7 zeigt eine Schwellwertkennlinie für einen so genannten weichen Crash. Ein weicher Crash ist gekennzeichnet durch eine hohe Eindringtiefe eines aufprallenden Objekts in das Kraftfahrzeug, wobei gleichzeitig eine vergleichsweise geringe Beschleunigung des Gesamtfahrzeugs stattfindet. Ein weicher Crash wird beispielsweise bei einem Typ ODB-Crash-Test oder bei einem Pfahl-Crash-Test erwartet. Durch eine Maximalwertabschätzung der obigen Gleichungen für eine maximale Eindringtiefe kann ein Zusammenhang der ersten Aufprallgröße $\dot{a}$ und der zweiten Aufprallgröße $\dot{V}$ erhalten werden wie folgt:

$$\dot{a} = k_2 \cdot \dot{V}^3 , \qquad\qquad [7]$$

wobei $k_2$ wiederum eine fahrzeugspezifische Konstante darstellt. Daraus folgt die in der Figur 7 als durchgezogene Linie dargestellte kubische Schwellwertkennlinie in Abhängigkeit von der Volumendeformationsrate $\dot{V}$ (zweite Aufprallgröße). Alle Werte für die Beschleunigungsänderung $\dot{a}$ (erste Aufprallgröße) rechts der Schwellwertlinie(th) werden als Auslösekriterium angesehen. Zusätzlich kann, was gestrichelt eingezeichnet ist, wiederum eine Mindestverformungsrate, gestrichelt parallel zur Hochwertachse eingezeichnet, und ein Mindest-Beschleunigungsanstieg, parallel zur Rechtswertachse, gestrichelt eingezeichnet, festgelegt werden als zusätzliches Auslösekriterium wie im Falle der Figur 6.

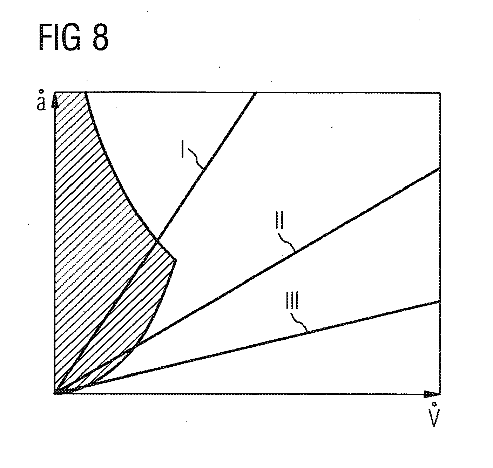

Figur 8 zeigt eine Kombination der Schwellwertkennlinien der Figuren 6 und 7. Nur der gestrichelte Bereich links der Schwellwertkennlinie (th) stellt Fälle dar, in denen ein Insassenschutzmittel nicht ausgelöst werden soll. Mit dieser zusammengesetzten Schwellwertkennlinie (th) können nun die sonst schwierig zu unterscheidenden Wandaufprallereignisse, die so genannten AZT-Crash-Tests, beides so genannte harte Crashs und der eher weiche Crash-Typ ODB voneinander unterschieden werden.

Fahrzeugaufprälle lassen sich grob in drei, wahlweise auch mehr, Aufprallarten klassifizieren, beispielsweise in harte, mittlere und weiche Aufprälle. In einer Kennlinienfeldauftragung der für einen Aufprall gewonnenen ersten Aufprallgrößen $\dot{a}$ zeigt, dass die Kennlinien für diese typischen Aufprallarten zumindest näherungsweise um eine jeweilige eine Ursprungsgerade verlaufen, die in der Figur 8 mit den Bezugszeichen I, II und III gekennzeichnet sind, jeweils für einen harten, einen mittleren bzw. einen weichen Aufprall.

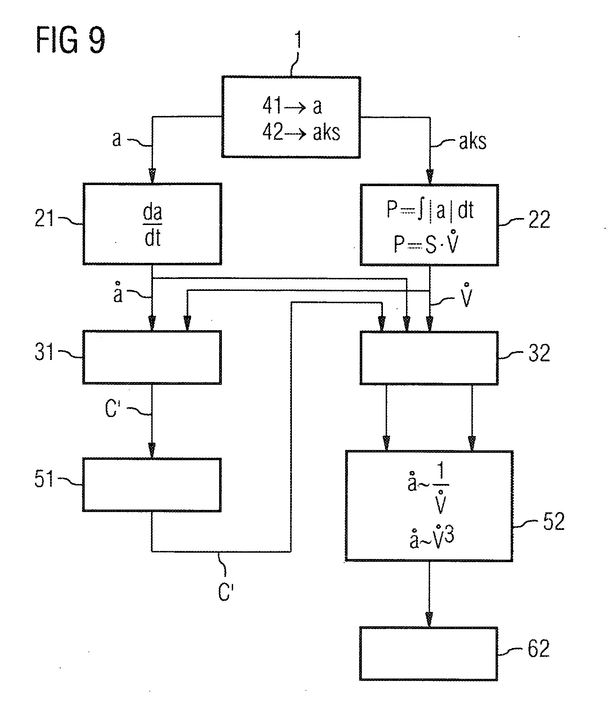

Figur 9 zeigt den schematischen Ablauf eines erfindungsgemäßen Verfahrens. Im Verfahrensschritt 1 nehmen der Beschleunigungssensor 41 das Beschleunigungssignal a und der Körperschallsensor 42 das Körperschallsensorsignal aks auf.

Das Beschleunigungssignal wird in einem weiteren Verfahrensschritt 21 differenziert, das Körperschallsignal aks wird in einem Verfahrensschritt 22 umgerechnet in eine Volumenänderung $\dot{V}$. Die Beschleunigungsänderung $\dot{a}$ und die Volumenänderung $\dot{V}$ werden in einem weiteren Verfahrensschritt 31 zur Berechnung der Härte C' des Aufpralls gemäß den bereits genannten physikalischen Zusammenhängen umgerechnet. In einem weiteren Verfahrensschritt 51 wird festgestellt, ob es sich um einen "weichen Crash" oder einen "harten Crash" handelt.

Das Ergebnis aus Verfahrensschritt 51 wird zusammen mit der Beschleunigungsänderung $\dot{a}$ und der Volumenänderung $\dot{V}$ innerhalb eines weiteren Verfahrensschrittes 32 dazu verwendet, aufgrund eines in der Auswerteeinheit 2' gespeicherten physikalischen Aufprall-Modells eine Schwellwertkennlinie (th) verändern.

Im hier gezeigten Verfahrensablauf setzt sich die Schwellwertkennlinie, die beispielsweise in der Figur 8 gezeigt wird, insbesondere aus zwei Abschnitten zusammen, einem Abschnitt, der gewonnen wird aus einem Modell für einen "harten Crash" und einem weiteren Abschnitt, der gewonnen wird für einen "weichen Crash".

In einem weiteren Verfahrensschritt 52 wird die Beschleunigungsänderung gegen die auf diese Weise gewonnene Schwellwertkennlinie (th) verglichen. Liegt ein Überschreiten der Beschleunigungsänderung $\dot{a}$ vor, so wird in einem weiteren Verfahrensschritt 61 ein Auslösesignal für ein Insassenschutzmittel ausgegeben und das Insassenschutzmittel ausgelöst.

**Patentansprüche**

1. Verfahren zum Auslösen eines Personenschutzmittels für ein Fahrzeug, insbesondere eines Insassenschutzmittels in einem Fahrzeug, bei dem

   - ein erster Aufprallsensor (41) ein Beschleunigungssensor ist und ein erstes Aufprallsignal (a), ein Beschleunigungssignal, liefert,
   - eine aus dem Beschleunigungssignal (a) abgeleitete erste Aufprallgröße ($\dot{a}$) mit einem Schwellwert (th) verglichen wird,
   - ein zweiter Aufprallsensor (42) ein zweites Aufprallsignal (aks) liefert
   - eine aus dem zweiten Aufprallsignal (aks) abgeleitete zweite Aufprallgröße ($\dot{V}$) gebildet wird,
   - der Schwellwert (th) abhängig von der zweiten Aufprallgröße ($\dot{V}$) veränderlich ausgebildet ist,
   - das Personenschutzmittel ausgelöst wird, vorzugsweise nur dann, wenn das Beschleunigungssignal den Schwellwert (th) überschreitet,
   - der zweite Aufprallsensor (42) ein Körperschallsensor ist
   - das zweite Aufprallsignal (aks) ein Körperschallsignal ist und
   - die zweite Aufprallgröße ($\dot{V}$) zumindest näherungsweise ein Maß für die Volumenänderung des Fahrzeugs während des Aufpralls darstellt **dadurch gekennzeichnet, dass** die zweite Aufprallgröße ($V$) proportional zur Schallleistung, zur mittleren Schallleistung oder zur Schallenergie des Körperschallsignals (aks) ist.

2. Verfahren nach Anspruch 1, **dadurch gekennzeichnet, dass** die zweite Aufprallgröße ($\dot{V}$) gebildet wird durch oder zumindest abgeleitet wird aus dem Betrag des gemessenen Körperschallsignals (aks) oder eines zeitlich normierten Integrals davon.

3. Verfahren nach einem der Ansprüche 1 oder 2, **dadurch gekennzeichnet, dass** die zweite Aufprallgröße ($\dot{V}$) gebildet wird durch oder zumindest abgeleitet wird aus dem Quadrat des gemessenen Körperschallsignals (aks) oder eines zeitlich normierten Integrals davon.

4. Verfahren nach einem der vorhergehenden Ansprüche, **dadurch gekennzeichnet, dass** die erste Aufprallgröße

($\dot{a}$) ein Maß für die Beschleunigungsänderung ist.

5. Verfahren nach einem der vorhergehenden Ansprüche 1 bis 3, **dadurch gekennzeichnet, dass** der Schwellwert (th) zumindest abschnittsweise umgekehrt proportional zu der zweiten Aufprallgröße ($\dot{V}$) ist.

6. Verfahren nach einem der vorhergehenden Ansprüche 1 bis 4, **dadurch gekennzeichnet, dass** der Schwellwert (th) zumindest Abschnittsweise proportional zur dritten Potenz der zweiten Aufprallgröße ($\dot{V}$) ist.

7. Vorrichtung zum Auslösen eines Personenschutzmittels für ein Fahrzeug, insbesondere eines Insassenschutzmittels in einem Fahrzeug, mit einem Beschleunigungssensor (41), einem Körperschallsensor (42) und einer Auswerteinheit (2') für die Signale der beiden Aufprallsensoren (41, 42), **dadurch gekennzeichnet, dass** die Vorrichtung geeignet ist, ein Verfahren gemäß einem der Ansprüche 1 bis 6 durchzuführen.

8. Vorrichtung nach Anspruch 7, **dadurch gekennzeichnet, dass** der Beschleunigungssensor (41) und der Körperschallsensor (42) durch eine gemeinsame Sensoreinheit (4) gebildet werden, wobei ein breitbandiges Beschleunigungssignal durch ein gemeinsames Sensorelement messbar ist und ein niederfrequentes Beschleunigungssignal (a) durch einen Tiefpassfilter erzeugbar ist und ein Körperschallsignal (aks) durch einen Hochpassfilter erzeugbar ist.

**Claims**

1. Method for triggering a personal protection means for a vehicle, in particular an occupant protection means in a vehicle, in which

    - a first impact sensor (41) is an acceleration sensor and provides a first impact signal (a), an acceleration signal,
    - a first impact variable ($\dot{a}$) derived from the acceleration signal (a) is compared with a threshold value (th),
    - a second impact sensor (42) provides a second impact signal (aks)
    - a second impact variable ($\dot{V}$) derived from the second impact signal (aks) is formed,
    - the threshold value (th) is embodied variably as a function of the second impact variable ($\dot{V}$),
    - the personal protection means is triggered, preferably only if the acceleration signal exceeds the threshold value (th)
    - the second impact sensor (42) is an impact sound sensor
    - the second impact signal (aks) is an impact sound signal and
    - the second impact variable ($\dot{V}$) at least approximately represents the extent of the volume change of the vehicle during the impact, **characterised in that** the second impact variable ($\dot{V}$) is proportional to the sound power, to the average sound power or to the sound energy of the impact sound signal (aks).

2. Method according to claim 1, **characterised in that** the second impact variable ($\dot{V}$) is formed by or at least derived from the sum of the measured impact sound signal (aks) or a temporally standardised integral thereof.

3. Method according to one of claims 1 or 2, **characterised in that** the second impact variable ($\dot{V}$) is formed by or at least derived from the square of the measured impact sound signal (aks) or a temporally standardised integral thereof.

4. Method according to one of the preceding claims, **characterised in that** the first impact variable ($\dot{a}$) is a measurement of the acceleration change.

5. Method according to one of the preceding claims 1 to 3, **characterised in that** the threshold value (th) is inversely proportional to the second impact variable ($\dot{V}$) at least in sections.

6. Method according to one of the preceding claims 1 to 4, **characterised in that** the threshold value (th) is proportional to the third power of the second impact variable ($\dot{V}$) at least in sections.

7. Device for triggering a personal protection means for a vehicle, in particular an occupant protection means in a vehicle, with an acceleration sensor (41), an impact sound sensor (42) and an evaluation unit (2') for the signals of the two impact sensors (41, 42), **characterised in that** the device is suited to implementing a method according to one of claims 1 to 6.

8. Device according to claim 7, **characterised in that** the acceleration sensor (41) and the impact sound sensor (42) are formed by a common sensor unit (4), with it being possible to measure a wideband acceleration signal by means of a shared sensor element and to generate a low-frequency acceleration signal (a) by means of a low pass filter and to generate an impact sound signal (aks) by means of a high pass filter.

**Revendications**

1. Procédé pour déclencher un moyen de protection de personnes pour un véhicule automobile, en particulier un moyen de protection d'occupant dans un véhicule automobile, au cours duquel

   - un premier capteur de chocs (41) est un capteur d'accélération (a) et délivre un premier signal de choc (a), un signal d'accélération,
   - une première grandeur de choc (a') déduite du signal d'accélération est comparée à une valeur de seuil (th),
   - un deuxième capteur de chocs (42) délivre un deuxième signal de choc (aks),
   - une deuxième grandeur de choc (v') déduite du deuxième signal de choc (aks) est formée,
   - la valeur de seuil (th) est rendue variable en fonction de la deuxième grandeur de choc (v'),
   - le moyen de protection de personnes est déclenché, de préférence seulement lorsque le signal d'accélération dépasse vers le haut la valeur de seuil (th),
   - le deuxième capteur de chocs (42) est un capteur de bruit solidien,
   - le deuxième signal de choc (aks) est un signal de bruit solidien et
   - la deuxième grandeur de choc (v') constitue au moins approximativement une mesure du changement de volume du véhicule pendant le choc, **caractérisé en ce que** la deuxième grandeur de choc (v') est proportionnelle à la puissance acoustique, à la puissance acoustique moyenne ou à l'énergie acoustique du signal de bruit solidien (aks).

2. Procédé selon la revendication 1, **caractérisé en ce que** la deuxième grandeur de choc (v') est formée à partir de la valeur du signal de bruit solidien (aks) mesuré ou d'une intégrale normée temporellement de ce signal, ou en est au moins déduite.

3. Procédé selon l'une des revendications 1 ou 2, **caractérisé en ce que** la deuxième grandeur de choc (v') est formée à partir du carré du signal de bruit solidien (aks) mesuré ou d'une intégrale normée temporellement de ce signal, ou en est au moins déduite.

4. Procédé suivant l'une des revendications précédentes, **caractérisé en ce que** la première grandeur de choc (a') est une mesure de la variation d'accélération.

5. Procédé selon l'une des revendications 1 à 3, **caractérisé en ce que** la valeur de seuil (th) est au moins par sections inversement proportionnelle à la deuxième grandeur de choc (v').

6. Procédé suivant l'une des revendications 1 à 4, **caractérisé en ce que** la valeur de seuil (th) est au moins par sections proportionnelle à la puissance trois de la deuxième grandeur de choc (v').

7. Dispositif destiné à déclencher un moyen de protection de personnes pour un véhicule automobile, en particulier un moyen de protection d'occupant d'un véhicule automobile, comprenant un capteur d'accélération (41), un capteur de bruit solidien (42) et une unité d'évaluation (2') pour les signaux produits par les deux capteurs de choc (41, 42), **caractérisé en ce que** le dispositif est approprié pour exécuter un procédé selon l'une des revendications 1 à 6.

8. Dispositif selon la revendication 7, **caractérisé en ce que** le capteur d'accélération (41) est le capteur de bruit solidien (42) sont formés par une unité commune de détection (4), un signal d'accélération à large bande pouvant être mesuré par un élément commun de détection, un signal d'accélération (a) à faible fréquence pouvant être généré par un filtre passe-bas et un signal de bruit solidien (aks) pouvant être généré par un filtre passe-haut.+6+

FIG 1

FIG 2

FIG 3

FIG 4

FIG 5

## FIG 6

## FIG 7

## FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0458796 B2
- EP 0305654 B1
- EP 1019271 B1
- DE 102005020146 A1